(19) Europäisches Patentamt
European Patent Office
Office européen des brevets

(11) Numéro de publication : **0 686 762 A1**

(12) **DEMANDE DE BREVET EUROPEEN**

(21) Numéro de dépôt : 95401163.1

(22) Date de dépôt : 19.05.95

(51) Int. Cl.$^6$ : **F02D 41/40,** F02D 41/14, F02D 41/02

(30) Priorité : 06.06.94 FR 9406873

(43) Date de publication de la demande : 13.12.95 Bulletin 95/50

(84) Etats contractants désignés : DE ES GB IT SE

(71) Demandeur : RENAULT VEHICULES INDUSTRIELS
129 rue Servient,
"La Part Dieu"
F-69431 Lyon Cedex 03 (FR)

(72) Inventeur : **Drutel, Yves**
17, Résidence "Les Hauts de Brignais"
F-69530 Brignais (FR)
Inventeur : **Ranc, Denis**
8, rue Colette
F-69800 Saint-Priest (FR)
Inventeur : **Miettaux, Marc**
18, Avenue des Platanes
F-69150 Decines (FR)

(74) Mandataire : **Fernandez, Francis Lionel**
Régie Nationale des Usines Renault SA
Service 0267 - Bâtiment J2
860, Quai de Stalingrad
B.P. 103
F-92109 Boulogne Billancourt (FR)

(54) **Procédé et dispositif de détermination des paramètres spécifiques des injecteurs d'un moteur à combustion, notamment Diesel à pré-injection**

(57) L'invention propose un procédé de détermination des paramètres spécifiques de chacun des injecteurs (8) d'un dispositif d'injection d'un moteur à combustion, notamment d'un dispositif avec pré-injection à commande électronique d'un moteur Diesel, caractérisé en ce que l'on établit la courbe de la différence de vitesse instantanée (DVi) de l'arbre moteur entre l'instant de passage au point mort haut de combustion du cylindre considéré et un instant ultérieur précédant le passage au point mort haut de combustion du cylindre suivant en fonction de la valeur du paramètre à déterminer, les autres paramètres de fonctionnement étant maintenus constants, et on détermine la valeur optimale dudit paramètre correspondant à un extremum de ladite courbe.

FIG.1

EP 0 686 762 A1

La présente invention concerne les moteurs à combustion équipant notamment les véhicules automobiles.

L'invention concerne notamment les moteurs Diesel à pré-injection ou injection pilote, c'est-à-dire dans lesquels l'injection est réalisée en deux fois, à savoir une pré-injection et une injection principale séparées.

L'invention s'applique en particulier aux systèmes d'injection électroniques qui comportent un processeur qui commande des électrovannes de commande des injecteurs en fonction d'un programme. Ce programme prend en compte les différents paramètres de fonctionnement du moteur tels que la vitesse de rotation, la pression d'injection, la position de l'arbre à cames et la pression d'injection.

Il est souhaitable que ce programme prenne également en compte les caractéristiques spécifiques de chacun des injecteurs afin d'équilibrer au maximum le fonctionnement du moteur et d'optimiser le bruit de combustion et de contrôler les émissions gazeuses. Pour cela, il est nécessaire de pouvoir garantir une parfaite reproductibilité d'un cylindre à l'autre et il faut donc connaître les paramètres spécifiques de chaque injecteur, c'est-à-dire ses caractéristiques électro-hydrauliques.

La présente invention a pour objet un procédé de détermination des paramètres spécifiques de chacun des injecteurs d'un dispositif d'injection à commande électronique, caractérisé en ce que l'on établit la courbe de la différence de vitesse instantanée de l'arbre moteur entre l'instant de passage au point mort haut de combustion du cylindre considéré et un instant ultérieur précédant le passage au point mort haut de combustion du cylindre suivant en fonction de la valeur du paramètre à déterminer, les autres paramètres de fonctionnement étant maintenus constants, et on détermine la valeur optimale dudit paramètre correspondant à un extremum de ladite courbe.

En effet, cette différence de vitesse instantanée est représentative de la pression régnant dans le cylindre, pression qui ne peut être mesurée directement, mais dont la valeur est fortement dépendante de la quantité de combustible injectée.

Selon une autre caractéristique de l'invention, on détermine au préalable, pour chaque injecteur, la durée de la commande électronique garantissant un débit identique à pression d'injection constante.

Ceci permet de réaliser un équilibrage des débits poste à poste du système d'injection.

Pour déterminer le temps de réponse hydraulique de chaque injecteur, on applique deux injections séparées par un intervalle de temps constant, on fait varier la durée de commande de la pré-injection, en maintenant la somme des deux durées constante, et on détermine la valeur de la durée de commande de la pré-injection correspondant à la rupture de pente de la courbe de la différence de vitesse instantanée.

Pour déterminer l'intervalle de temps minimal entre les deux injections de chaque injecteur, on applique deux injections de durées de commande fixes, on fait varier l'intervalle de temps entre les deux injections et on détermine l'intervalle de temps correspondant au maximum de la courbe de différence de vitesse instantanée.

Avantageusement, la différence de vitesse instantanée est mesurée à un instant ultérieur décalé de la moitié de l'angle de rotation séparant les points morts hauts de combustion du cylindre considéré et du cylindre suivant.

De cette manière, on obtient une valeur maximale de la différence de vitesse instantanée.

Selon une autre caractéristique de l'invention, les mesures sont effectuées à un régime de ralenti, le moteur étant à vide.

Ceci permet d'avoir une inertie minimale et d'obtenir des différences de vitesse instantanée importantes.

Selon encore une autre caractéristique de l'invention, les mesures sont effectuées avec une avance de l'injection permettant un début de combustion au point mort haut.

L'invention a également pour objet un dispositif pour la mise en oeuvre du procédé précité.

Selon un premier mode de réalisation, le procédé selon l'invention est réalisé sous forme d'un programme intégré dans un module électronique de commande des injecteurs.

Ceci permet d'effectuer une détermination des paramètres spécifiques des injecteurs à tout moment, en particulier après le remplacement d'un ou plusieurs injecteurs ou pour effectuer des tests de contrôle en cas de mauvais fonctionnement du moteur.

Selon un autre mode de réalisation, le procédé selon l'invention réalisé sous forme d'un programme intégré dans un module spécifique pouvant être branché sur le module électronique de commande des injecteurs.

Un tel module spécifique peut être utilisé en fin de chaîne de montage pour la mise au point du moteur ou dans le réseau après-vente en particulier en cas de remplacement d'injecteurs.

D'autres caractéristiques et avantages de l'invention apparaîtront à la lecture de la description détaillée qui va suivre pour la compréhension de laquelle on se reportera aux dessins annexés dans lesquels :

- La figure 1 représente schématiquement un dispositif électronique de commande des injecteurs d'un moteur Diesel ;
- la figure 2 est une courbe représentant la variation de vitesse d'un moteur équilibré à 6 cylindres en ligne ;
- la figure 3 représente, à titre d'exemple, les courbes du débit en fonction de la durée de commande de l'ouverture pour trois injecteurs ;

- les figures 4 à 7 illustrent la détermination du temps de réponse hydraulique des injecteurs, et ;

- les figures 8 à 10 illustrent la détermination de l'intervalle de temps minimal entre la pré-injection et l'injection principale.

L'invention s'applique en particulier aux systèmes électroniques de commande des injecteurs d'un moteur Diesel à injection pilote dans lequel l'injection s'effectue en deux temps distincts, à savoir une pré-injection de courte durée et une injection principale.

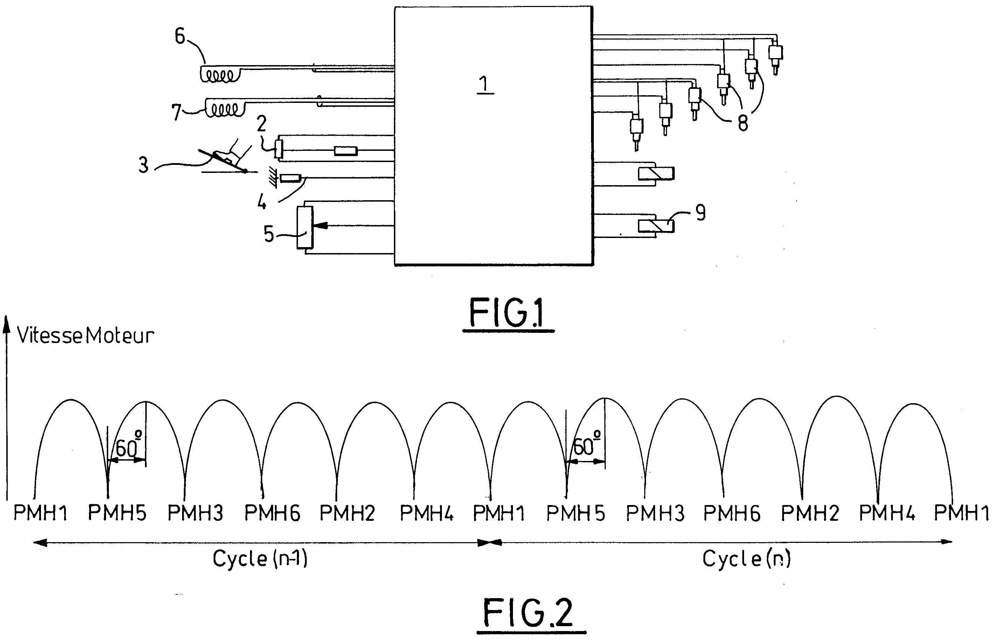

La figure 1 représente schématiquement un tel système. Il comporte essentiellement un processeur 1 qui reçoit des informations d'un capteur 2 actionné par la pédale d'accélérateur 3, d'un contact 4 imposant un fonctionnement au ralenti, d'un capteur de pression d'injection 5, d'un capteur de la vitesse de rotation de l'arbre moteur 6 et d'un capteur de la position angulaire d'un arbre à cames 7.

Ce processeur commande les électrovannes des injecteurs 8 d'un moteur Diesel et contrôle la pression d'injection au moyen, à titre d'exemple, des électrovannes 9 de commande de la pression d'injection. Cette commande est réalisée par un programme qui prend en compte les paramètres de fonctionnement fournis par les capteurs 2 et 4 à 7.

Ce programme comporte en particulier une cartographie comprenant des courbes préétablies de fonctionnement du moteur, par exemple des courbes de débit des injecteurs en fonction de la pression et de la durée de commande de l'ouverture des électrovannes desdits injecteurs.

Pour équilibrer et optimiser le fonctionnement du moteur, il est souhaitable d'introduire dans cette cartographie les caractéristiques spécifiques de chacun des injecteurs qui peuvent avoir des caractéristiques différentes, ce qui peut introduire des dispersions dans le fonctionnement du moteur.

En effet, le débit de carburant injecté est directement dépendant de la durée de commande électrique de l'injecteur. Le calculateur de pilotage permet de définir des durées de commande très précises et très fiables. Par contre, les caractéristiques hydrauliques des injecteurs ne permettent pas de contrôler très fidèlement les faibles débits. Notamment, dans un système d'injection pilote évolué permettant de commander une pré-injection et une injection principale séparées par un intervalle de temps très court, il devient très difficile d'obtenir un comportement homogène pour chaque cylindre.

Ces faibles durées de commande permettent d'obtenir les meilleurs résultats face aux exigences réglementaires en matière d'émissions gazeuses et sonores.

L'invention permet de déterminer les paramètres caractéristiques de chacun des injecteurs afin de compléter la cartographie du programme et d'harmoniser le fonctionnement des différents cylindres.

La figure 2 représente les variations de la vitesse d'un moteur à six cylindres en ligne parfaitement équilibré. Entre deux points morts hauts de combustion successifs, (PMH1, PMH2, ...) il existe une arche de variation positive de la vitesse. Dans le cas présent la longueur d'une arche correspond à une rotation de 120° de l'arbre moteur.

Pour une vitesse de 1000 tours par minute, la hauteur de cette arche, c'est-à-dire la variation maximale de la vitesse est par exemple de 30 tours par minute. Cette variation maximale est obtenue à un instant correspondant à une rotation de 60° après le point mort haut de combustion du cylindre considéré, c'est-à-dire à la moitié du temps séparant deux injections successives. Dans le cas d'un moteur à quatre cylindres la vitesse sera maximale à 90° après le point mort haut de combustion, et à 45° pour un moteur à 8 cylindres en V.

Dans une première phase préliminaire, on réalise un équilibrage des débits poste à poste du système d'injection. Le moteur tourne à vide au régime de ralenti, l'avance à l'injection est réglée pour obtenir un début de combustion au point mort haut et la pression d'injection est maintenue constante.

On réalise une simple injection de même durée de commande pour tous les injecteurs et on mesure la différence de vitesse instantanée, $DV_i$, entre le passage au point mort de combustion et un instant décalé de 60° pour chaque cylindre. On mesure également la moyenne $MDV_i$ des différences de vitesse instantanée de tous les cylindres pour un tour du moteur.

On effectue alors la correction suivante sur la durée de commande de chaque injecteur de rang i :

$$DTQ_i = k (DV_i - MDV_i)$$

et la nouvelle durée de commande corrigée pour chaque injecteur est :

$$TQ_i \text{ corrigée} = TQ_i - k (DV_i - MDV_i).$$

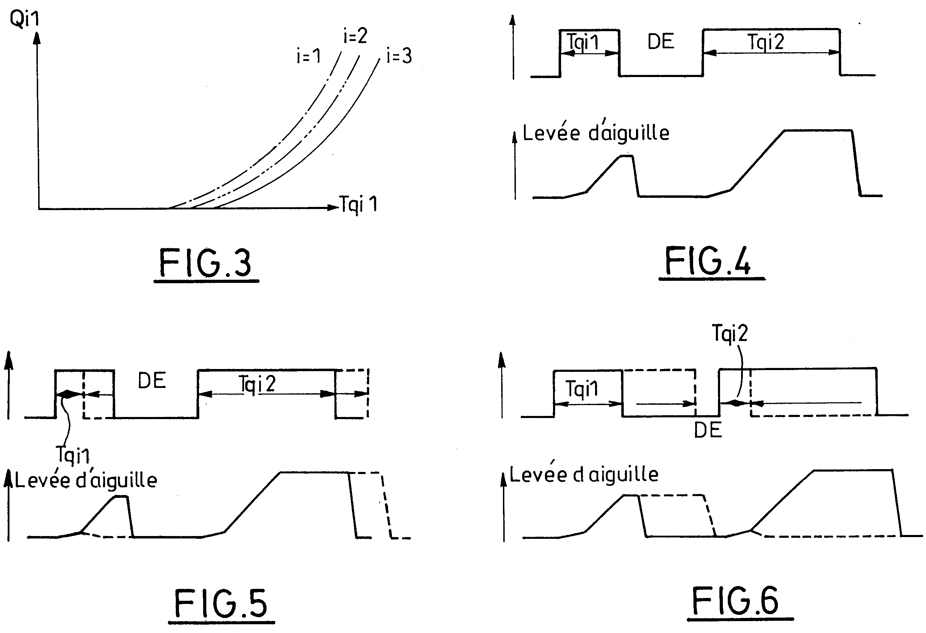

Connaissant l'allure générale des courbes de débit en fonction de la durée de commande, on peut établir ces courbes à pression constante pour chaque injecteur comme cela est illustré sur la figure 3.

Dans une deuxième phase, on maintient les mêmes conditions de mesure, mais on réalise une injection pilote avec une pré-injection de durée $TQ_{i1}$ et une injection principale de durée $TQ_{i2}$ séparées par un délai fixe DE.

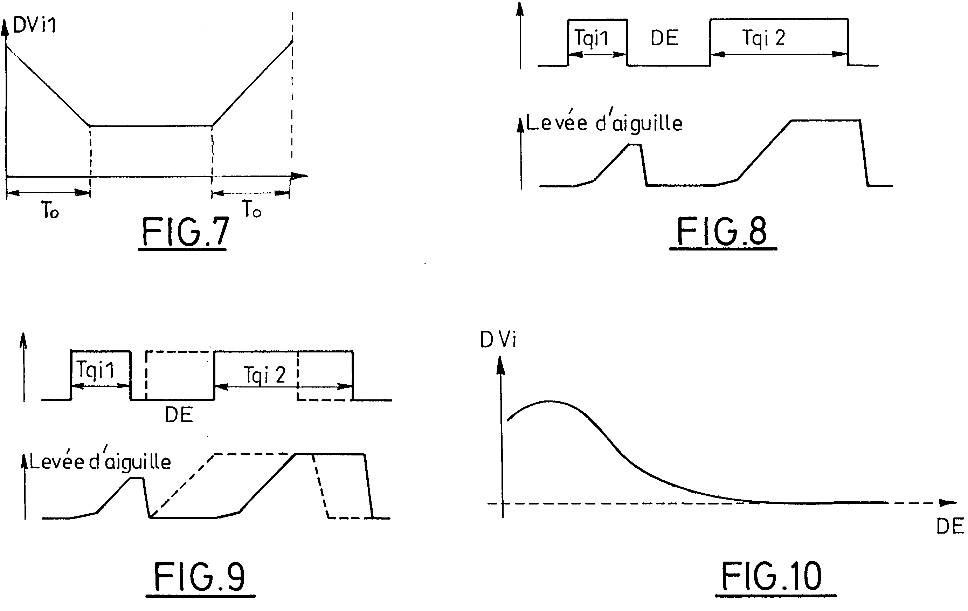

On fait varier la durée de pré-injection $TQ_{i1}$ en maintenant la durée totale d'injection $TQ_{i1} + TQ_{i2}$ constante et on établit la courbe de différence de vitesse instantanée en fonction de la durée de la pré-injection $TQ_{i1}$. Cette courbe représentée à la figure 7 présente un palier minimum. Le point de rupture de pente de cette courbe permet de déterminer le temps d'ouverture de l'injecteur à partir duquel ledit injecteur commence à débiter.

Les figures 4 à 6 représentent chacune la durée de commande et la levée d'aiguille d'injecteur correspondante pour trois valeurs de TQi1.

Les courbes de la figure 5 correspondent à la valeur de TQi1 pour laquelle l'injection disparaît, c'est-à-dire au minimum de la courbe de la figure 7. Cette valeur correspond à la durée minimale de l'injection pilote qui permet d'obtenir le plus petit débit quantifiable. Cette valeur est l'abscisse à l'origine de la courbe de débit en fonction de la durée pour le cylindre considéré ; elle est utilisée pour garnir une cartographie d'identité de l'injecteur. Connaissant le point de cette cartographie pour le régime de ralenti et le point à débit nul, il est possible de garnir linéairement cette zone de cartographie.

Cette procédure est réalisée pour chaque injecteur afin de déterminer une cartographie particulière pour chaque poste, ce qui garantit un comportement identique en injection pilote.

Dans une troisième phase, on conserve les mêmes conditions générales de mesure, on réalise une injection double dont les durées TQi1 et TQi2 sont maintenues constantes et on fait varier le délai séparant les deux injections en relevant toujours la courbe de la différence de vitesse instantanée ; les courbes des figures 8 et 9 correspondent à deux valeurs différentes du délai DE.

Lorsque l'on arrive à un délai minimal qui ne permet plus à l'injecteur de se refermer avant la deuxième commande, la différence de vitesse instantanée passe par un maximum, comme on le voit sur la courbe de la figure 10. Le débit résultant devient supérieur au débit demandé car l'injecteur se comporte comme s'il n'avait reçu qu'une seule commande. On détermine ainsi le délai minimal admissible pour un injecteur ; il est directement lié au temps de fermeture de l'injecteur.

L'identification de cette caractéristique est très importante car elle permettra notamment d'optimiser et de garantir fidèlement sur chaque injecteur le bruit de combustion.

Cette procédure est effectuée pour chaque cylindre. La détermination de cette caractéristique permet de garantir pour chaque cylindre le même comportement en injection, même si les caractéristiques des injecteurs ne sont pas identiques. Il est ainsi possible de garantir pour chaque cylindre le même taux d'introduction et un comportement identique en combustion.

Le procédé qui vient d'être décrit est avantageusement réalisé sous la forme d'un programme informatique qui peut être intégré dans le processeur de commande des injecteurs et rester à demeure dans le moteur. Il peut également être intégré dans un module spécifique qui peut être branché sur le processeur.

Dans les deux cas, le programme est exécuté par le processeur en utilisant les capteurs et les actuateurs qui sont à demeure sur le moteur. Le capteur de pression d'injection 5 et les électrovannes 9 de commande de la pression d'injection servent à réguler la pression d'injection à une valeur constante. Le contact de ralenti 4 est fermé de manière à imposer le fonctionnement du moteur au régime de ralenti.

Le capteur de position angulaire de l'arbre à cames 7 permet d'identifier le cylindre pour lequel on effectue la mesure. Le capteur de vitesse de l'arbre moteur 6 permet de repérer le passage au point mort haut de combustion et le passage à 60° après ce passage au point mort haut et il fournit la valeur de la différence de vitesse instantanée entre ces deux passages. Les courbes des deuxième et troisième phases sont obtenues en agissant sur les durées d'ouverture des électrovannes des injecteurs 8. Les valeurs obtenues pour les paramètres de chaque injecteur sont enregistrées dans la cartographie du processeur 1. Dans le cas d'une intervention en après-vente, les valeurs obtenues remplacent les valeurs précédentes.

Le procédé selon l'invention peut être mis en oeuvre lors du contrôle de fin de chaîne de montage pour la mise au point du moteur. Il peut également être utilisé pour réaliser des tests en cas de mauvais fonctionnement du moteur dans le cadre du service après-vente. Il peut aussi servir à une nouvelle mise au point dans le cas du changement d'un ou plusieurs injecteurs.

## Revendications

1. Procédé de détermination des paramètres spécifiques de chacun des injecteurs (8) d'un dispositif d'injection d'un moteur à combustion, notamment d'un dispositif avec pré-injection à commande électronique d'un moteur Diesel, caractérisé en ce que l'on établit la courbe de la différence de vitesse instantanée (DVi) de l'arbre moteur entre l'instant de passage au point mort haut de combustion du cylindre considéré et un instant ultérieur précédant le passage au point mort haut de combustion du cylindre suivant en fonction de la valeur du paramètre à déterminer, les autres paramètres de fonctionnement étant maintenus constants, et on détermine la valeur optimale dudit paramètre correspondant à un extremum de ladite courbe.

2. Procédé selon la revendication 1, caractérisé en ce que l'on détermine au préalable, pour chaque injecteur (8), la durée de la commande électronique garantissant un débit identique à pression d'injection constante.

3. Procédé selon la revendication 1, caractérisé en ce que l'on applique une même durée d'injection unique (TQi) à chaque injecteur, on mesure ladite différence de vitesse instantanée (DVi) pour chaque cylindre, on calcule la moyenne desdites différences de vitesse instantanée (MDVi), et on détermine par correction ladite durée de commande pour le débit déterminé par la formule suivante :

TQi corrigée = TQi - k (DVi - MDVi).

4. Procédé selon l'une quelconque des revendications 1 à 3, caractérisé en ce que, pour déterminer le temps de réponse hydraulique de chaque injecteur, on applique deux injections séparées par un intervalle de temps constant, on fait varier la durée de commande de la pré-injection, en maintenant la somme des deux durées constante, et on détermine la valeur de la durée de commande de la pré-injection correspondant à la rupture de pente de la courbe de la différence de vitesse instantanée (DVi1).

5. Procédé selon l'une quelconque des revendications 1 à 3, caractérisé en ce que pour déterminer l'intervalle de temps minimal entre les deux injections de chaque injecteur, on applique deux injections de durées de commande fixes, on fait varier l'intervalle de temps entre les deux injections et on détermine l'intervalle de temps correspondant au maximum de la courbe de différence de vitesse instantanée (DVi).

6. Procédé selon l'une quelconque des revendications 1 à 3, caractérisé en ce que la différence de vitesse instantanée (DVi) est mesurée à un instant ultérieur décalé de la moitié de l'angle de rotation séparant les points morts hauts de combustion du cylindre considéré et du cylindre suivant.

7. Procédé selon l'une des revendications 1 à 6, caractérisé en ce que les mesures sont effectuées à un régime de ralenti, le moteur étant à vide.

8. Procédé selon l'une des revendications 1 à 6, caractérisé en ce que les mesures sont effectuées avec une avance de l'injection permettant un début de combustion au point mort haut.

9. Dispositif pour la mise en oeuvre du procédé selon l'une des revendications 1 à 8, caractérisé en ce qu'il est réalisé sous forme d'un programme intégré dans un module électronique de commande des injecteurs.

10. Dispositif pour la mise en oeuvre du procédé selon l'une des revendications 1 à 8, caractérisé en ce qu'il est réalisé sous forme d'un programme intégré dans un module spécifique pouvant être branché sur le module électronique de commande des injecteurs.

FIG.1

Vitesse Moteur

PMH1 PMH5 PMH3 PMH6 PMH2 PMH1 PMH4 PMH2 PMH6 PMH3 PMH5 PMH1 PMH4 PMH2 PMH6 PMH3 PMH1

60°     60°

Cycle (n-1)     Cycle (n)

FIG.2

EP 0 686 762 A1

## FIG.3

Qi1

i=1  i=2  i=3

Tqi 1

## FIG.4

Tqi1  DE  Tqi2

Levée d'aiguille

## FIG.5

DE  Tqi2

Tqi1

Levée d'aiguille

## FIG.6

Tqi2

Tqi1

DE

Levée d'aiguille

FIG.7

FIG.8

FIG.9

FIG.10

**Office européen**
**des brevets**

## RAPPORT DE RECHERCHE EUROPEENNE

Numero de la demande

EP 95 40 1163

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-4 667 634 (MATSUMURA ET AL.)<br>* colonne 4, ligne 57 - colonne 8, ligne 62 *<br>--- | 1-3,6,7 | F02D41/40<br>F02D41/14<br>F02D41/02 |
| A | US-A-4 561 397 (TSUKAMOTO ET AL.)<br>* le document en entier *<br>--- | 1-3,6,7 | |
| A | EP-A-0 416 265 (ROBERT BOSCH GMBH)<br><br>* colonne 4, ligne 5 - colonne 5, ligne 12; figures *<br>--- | 2,4,7,9,10 | |
| A | FR-A-2 688 547 (ROBERT BOSCH GMBH)<br><br>* page 3, ligne 23 - page 4, ligne 11 *<br>* page 13, ligne 29 - page 16, ligne 24 *<br>--- | 2,4,7,9,10 | |
| A | GB-A-2 272 785 (ROBERT BOSCH GMBH)<br>----- | | |

| | | DOMAINES TECHNIQUES RECHERCHES (Int.Cl.6) |
|---|---|---|
| | | F02D<br>G01M |

**Le présent rapport a été établi pour toutes les revendications**

| Lieu de la recherche | Date d'achèvement de la recherche | Examinateur |
|---|---|---|
| LA HAYE | 7 Août 1995 | Moualed, R |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)